# EUROPEAN PATENT APPLICATION

(11) **EP 4 572 355 A1**
(43) Date of publication of application: **18.06.2025**
(21) Application number: 23851342.8
(22) Date of filing: 02.06.2023
(51) Int. Cl.: H04W 8/24

(54) **CONFIGURATION FILE DOWNLOADING METHOD, TERMINAL AND STORAGE MEDIUM**

(30) Priority: 12.08.2022 CN 202210968414
(71) Applicant: ZTE CORPORATION, Shenzhen, Guangdong 518057 (CN)
(72) Inventor: SHI, Xiaoxia, Shenzhen, Guangdong 518057 (CN)
(74) Representative: Deambrogi, Edgardo
(86) International application number: PCT/CN2023/098130
(87) International publication number: WO 2024/032114

(57) **Abstract**

The embodiments of the present disclosure belong to the field of communications. Provided are a configuration file downloading method, a terminal, and a storage medium. The method comprises: after a mobile terminal is powered on, in the case where an eSIM card is not activated and a SIM card has been inserted, using a communication network of the SIM card to send a configuration file download instruction of the eSIM card to a server, wherein the SIM card is used for providing a communication network; and acquiring a target configuration file returned by the server based on the configuration file download instruction, and writing the target configuration file into the eSIM card to activate the eSIM card.

## Description

### Technical Field

The embodiments of the present disclosure relate to the field of communication technology, and in particular, to a configuration file downloading method, a terminal, and a storage medium.

### Background

A subscriber identity module (SIM) is independent from a mobile terminal, and the SIM card needs to be inserted into the mobile terminal to enable the mobile terminal to access a data network. Moreover, an embedded SIM (eSIM) card is usually embedded in the mobile terminal and can replace the SIM card. Furthermore, the eSIM card is non-removable, but can download configuration files from different operators to the eSIM card to achieve the purpose of switching cards or changing operators. However, some mobile terminals do not support wireless network (Wi-Fi) communication technology or Bluetooth technology due to limitations in application scenarios, making it difficult for the eSIM cards in the mobile terminals to quickly and efficiently download configuration files, resulting in a poor user experience. Therefore, how to improve the convenience and accuracy of configuration file downloads is a problem that urgently needs to be solved.

### Summary

The embodiments of the present disclosure provide a configuration file downloading method, a terminal, and a storage medium.

According to a first aspect, an embodiment of the present disclosure provides a configuration file downloading method, applied to a mobile terminal, the mobile terminal including an eSIM card. The method includes: after the mobile terminal is powered on, in the case where the eSIM card is not activated and a SIM card has been inserted, a communication network of the SIM card is used to send a configuration file downloading instruction of the eSIM card to a server, wherein the SIM card is used for providing a communication network; and a target configuration file returned by the server based on the configuration file downloading instruction is acquired, and the target configuration file is written into the eSIM card to activate the eSIM card.

According to a second aspect, an embodiment of the present disclosure further provides a mobile terminal, the mobile terminal including an eSIM card, a processor, a memory, a computer program stored in the memory and executable by the processor, and a data bus for implementing a communication connection between the processor and the memory, wherein the computer program, when executed by the processor, implements steps of any one of the configuration file downloading methods provided in the description of the embodiments of the present disclosure.

According to a third aspect, an embodiment of the present disclosure further provides a storage medium, used for computer-readable storage, wherein the storage medium stores one or more programs, and the one or more programs may be executed by one or more processors to implement steps of any one of the configuration file downloading methods provided in the description of the embodiments of the present disclosure.

### Brief Description of the Drawings

Fig. 1 is a schematic flowchart of a configuration file downloading method according to an embodiment of the present disclosure;
Fig. 2 is a schematic diagram of a scenario of a mobile terminal according to an embodiment of the present disclosure;
Fig. 3 is another schematic flowchart of a configuration file downloading method according to an embodiment of the present disclosure;
Fig. 4 is a schematic block diagram of the structure of a mobile terminal according to an embodiment of the present disclosure.

### Detailed Description of the Embodiments

The technical solutions in the embodiments of the present disclosure will be clearly and completely described below with reference to the drawings in the embodiments of the present disclosure. Obviously, the described embodiments are a part rather than all of the embodiments of the present disclosure. Based on the embodiments of the present disclosure, all other embodiments obtained by a person skilled in the art without inventive work belong to the scope of protection of the embodiments of the present disclosure.

The flowcharts shown in the drawings are merely illustrative, do not necessarily include all of the content and operations/steps, nor do they necessarily have to be executed in the described order. For example, some operations/steps may be separated, combined, or partially combined, and thus the order of actual execution may vary according to actual situations.

It should be understood that the terms used in the description of the embodiments of the present disclosure are merely for the purpose of describing specific embodiments and are not intended to limit the embodiments of the present disclosure. As used in the description of the embodiments of the present disclosure and the appended claims, the singular forms of "a", "an" and "the" are intended to include the plural forms as well, unless the context clearly indicates otherwise.

The embodiments of the present disclosure provide a configuration file downloading method a terminal, and a storage medium. The configuration file downloading method can be applied to a mobile terminal. The mobile terminal may be a device such as a mobile phone, a tablet computer, a laptop computer, a desktop computer, and a wearable device. For example, in the case where the mobile terminal is a mobile phone, after the mobile phone is powered on, in the case where an eSIM card is not activated, and a SIM card has been inserted, a communication network of the SIM card is used to send a configuration file download instruction of the eSIM card to a server; and a target configuration file returned by the server based on the configuration file download instruction is acquired, and the target configuration file is written into the eSIM to activate the eSIM card.

Some embodiments of the present disclosure will be described in detail below with reference to the accompanying drawings. Without conflict, the following embodiments and features in the embodiments may be combined with each other.

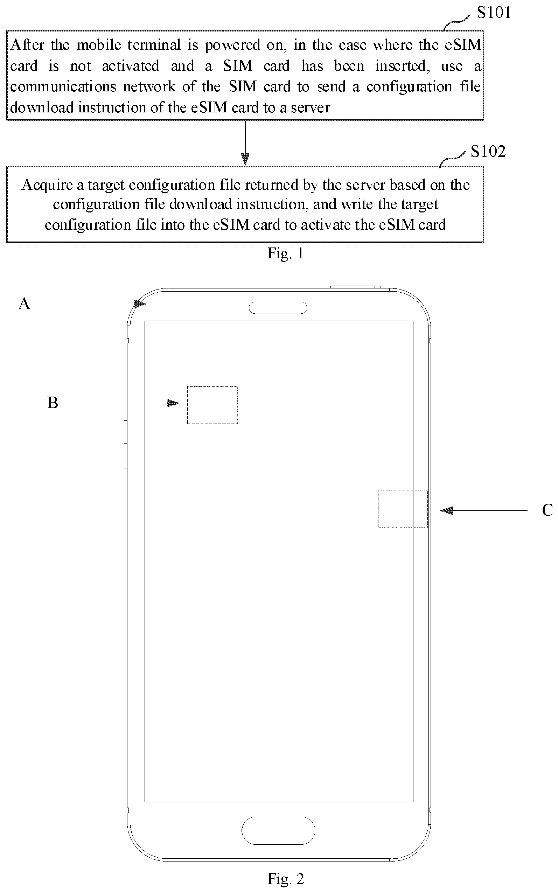

Please refer to Fig. 1, Fig. 1 is a schematic flowchart of a configuration file downloading method according to an embodiment of the present disclosure.

As shown in Fig. 1, the configuration file downloading method may include step S101 to step S102.

Step S101: after the mobile terminal is powered on, in the case where the eSIM card is not activated and a SIM card has been inserted, a communications network of the SIM card is used to send a configuration file download instruction of the eSIM card to a server, wherein the SIM card is used to provide a communication network.

The mobile terminal may include an eSIM card and a card slot, wherein the card slot is used for inserting a SIM card, and the SIM card is used for providing a communication network. The card slot may be configured according to actual situations, and is not limited in the embodiment of the present disclosure, for example, the card slot may be configured in a bottom area of the mobile terminal. For example, as shown in Fig. 2, the mobile terminal A includes an eSIM card B and a card slot C, wherein the eSIM card B is embedded in a circuit board on the upper left side of the mobile terminal A, the card slot C is located on the right side of the mobile terminal, and the slot C is used for inserting a SIM card.

It should be noted that the configuration file of the eSIM card in the embodiment of the present disclosure is a Profile, that is, the configuration file downloaded for the eSIM card in the embodiment of the present disclosure is a target Profile.

In an embodiment, after the mobile terminal is powered on, application information and file information of the eSIM card are acquired, wherein the application information includes information such as an international mobile subscriber identity (IMSI), or a universal subscriber identity module (USIM), and the file information includes information such as networking information and a configuration file list; and whether the eSIM card is activated is determined according to the file information. Whether the eSIM card is activated can be accurately determined by acquiring the file information of the eSIM card.

In an embodiment, the method for determining whether the eSIM card is activated according to the file information may be as follows: a configuration file list of the eSIM card is acquired from the file information; and whether the eSIM card is activated is determined according to the configuration file list. The configuration file list is a list of configuration files included in the eSIM card; and the types of configuration files included in the configuration file list can be set according to actual situations, and are not specifically limited in the embodiment of the present disclosure, for example, the types of configuration files include test configuration files, network access configuration files, and other types of configuration files. According to the configuration file list, it can be accurately determined whether the eSIM card is activated.

In an embodiment, the method for determining whether the eSIM card is activated according to the configuration file list may be as follows: whether a preset type of configuration file exists in the configuration file list is determined; and in the case where a preset type of configuration file exists in the configuration file list, it is determined that the eSIM card is activated, or in the case where the preset type of configuration file does not exist in the configuration file list, it is determined that the eSIM card is not activated. The preset type may be set according to actual situations, and is not specifically limited in the embodiment of the present disclosure, for example, the preset type may be an operational type. Whether the eSIM card is activated can be accurately determined by determining whether a preset type of configuration file exists in the configuration file list.

In an embodiment, in the case where it is determined that the eSIM card is not activated, whether a SIM card has been inserted is determined, and in the case where it is determined that a SIM card is not inserted, a preset prompt message is sent to prompt a user that the mobile terminal is not inserted with a SIM card, so that the user inserts a SIM card into the mobile terminal upon receiving the prompt message indicating that a SIM card is not inserted. The preset prompt message may be set according to actual situations, and is not specifically limited in the embodiment of the present invention. For example, the preset prompt message may be a voice message played by the mobile terminal indicating that a SIM card is not inserted, or a text message displayed on a display interface of the mobile terminal indicating that a SIM card is not inserted. When it is detected that a SIM card is not inserted, the user is timely prompted to insert a SIM card, thereby improving the efficiency of downloading the configuration file.

It should be noted that the method for determining whether a SIM card has been inserted may be set according to actual situations, and is not specifically limited in the embodiment of the present disclosure. For example, whether SIM card information can be acquired is determined; and if SIM card information can be acquired, it is determined that a SIM card has been inserted; or if it is detected that a SIM card detection identifier in the mobile terminal is a first identifier, it is determined that a SIM card has been inserted into the card slot.

In an embodiment, after the mobile terminal is powered on, in the case where the eSIM card is not activated and the SIM card has been inserted, whether the SIM card is registered with a communication network service is determined; and in the case where the SIM card is not registered with a communication network service, a communication network service registration request is sent to the SIM card, so that the SIM card requests registration with a communication network service from a server matching the SIM card according to the communication network service registration request. In the case where it is determined that the SIM card is not registered with a communication network service, the SIM card is controlled to register with a server for a communication network service, thereby improving the efficiency and accuracy of the mobile terminal in downloading a configuration file.

In an embodiment, the mobile terminal includes a local provisioning assistant (LPA); when it is determined that the SIM card is registered with a communication network, the LPA is controlled to use the communication network of the SIM card to establish a communication connection with the server; and a configuration file download instruction of the eSIM card is sent to a server through the communication connection. By controlling the LPA to use the communication network of the SIM card to send a configuration file download instruction of the eSIM card to a server, the efficiency and accuracy of downloading a configuration file can be improved.

In an embodiment, the LPA is controlled to use the communication network of the SIM card to establish a communication connection with the server in a preset connection method; and after the communication connection between the mobile terminal and the server is established, a configuration file downloading instruction of the eSIM card is sent to a server through the communication connection. The preset connection method may be selected according to actual situations, and is not specifically limited in the embodiment of the present invention. For example, the preset connection method may be a method of establishing a communication connection with a server by scanning a QR code of the server, or a method of establishing a communication connection with a server by entering a network address corresponding to the server.

Exemplarily, in the case where it is determined that the SIM card is registered with a communication network, a QR code of the server is acquired, and the mobile terminal is controlled to recognize QR code information, so that the LPA uses the communication network of the SIM card to establish a communication connection with the server through the QR code information; and after the communication connection between the mobile terminal and the server is established, the LPA sends a configuration file download instruction of the eSIM card to a server through the communication connection. By means of the QR code of the server, a communication connection can be accurately established with the server, thereby greatly improving the efficiency and accuracy of downloading a configuration file.

Exemplarily, when it is determined that the SIM card is registered with a communication network, a network address of the server is acquired, and the LPA is controlled to use the communication network of the SIM card to establish a communication connection with the server through the network address; and after the communication connection between the mobile terminal and the server is established, the LPA sends a configuration file download instruction of the eSIM card to a server through the communication connection. By means of the network address of the server, a communication connection can be accurately established with the server, thereby greatly improving the efficiency and accuracy of downloading a configuration file.

In an embodiment, in the case where applications other than the LPA attempt to use a communication network of the SIM card, the applications other than the LPA are prohibited from using the communication network of the SIM card. By prohibiting applications other than the LPA from using a communication network of the SIM card, the function of the SIM card is merely for the eSIM card to download a configuration file, thereby improving the efficiency and accuracy of the eSIM card in downloading a configuration file.

Exemplarily, the mobile terminal includes an LPA, an application 1, an application 2, an application 3 and an application 4. In the case where the LPA and the application 2 request to use a communication network of the SIM card, the request of the application 2 is prohibited, while the LPA is allowed to use a communication network of the SIM card to send a configuration file download instruction of the eSIM card to a server.

In an embodiment, after the mobile terminal is powered on, whether the eSIM card is activated is determined; in the case where the eSIM card is not activated, whether the mobile terminal is connected to a WiFi hotspot is determined; in the case where the mobile terminal is not connected to a WiFi hotspot, whether a SIM card has been inserted is determined; and in the case where a SIM card has been inserted, a communication network of the SIM card is used to send a configuration file download instruction of the eSIM card to the server. In the case where the eSIM card is not activated and the mobile terminal is not connected to a WiFi hotspot, a communication network of the SIM card is used to send a configuration file download instruction of the eSIM card to a server, thereby greatly improving the convenience and efficiency of downloading a configuration file.

Step S 102: a target configuration file returned by the server based on the configuration file download instruction is acquired, and the target configuration file is written into the eSIM card to activate the eSIM card.

The target configuration file is a configuration file for service registration of the eSIM card of the mobile terminal, and the target configuration file includes data such as a file system, a network access key parameter, an auxiliary security domain, and an application.

In an embodiment, a communication network of the SIM card sends a configuration file download instruction of the eSIM card to a server; the server receives the configuration file download instruction, and acquires a target configuration file according to the configuration file download instruction; the server returns the target configuration file to the mobile terminal through the communication network of the SIM card; and the mobile terminal writes the target configuration file into the eSIM card to activate the eSIM card. By receiving the target configuration file returned by the server, and writing the target configuration file into the eSIM card, the convenience and efficiency of the eSIM in downloading and activating a target configuration file are greatly improved.

In an embodiment, the method for acquiring a target configuration file according to the configuration file download instruction may be as follows: a preset mapping relationship table between configuration file download instructions and configuration files is acquired, a configuration file corresponding to the configuration file download instruction is queried from the mapping relationship table, and the configuration file is taken as the target configuration file. The mapping relationship table is pre-established according to configuration file download instructions and configuration files; and the mapping relationship table may be established according to actual situations, and is not specifically limited in the embodiment of the present disclosure. By means of the mapping relationship table, a target configuration file corresponding to the configuration file download instruction can be accurately queried, thereby greatly improving the efficiency of downloading a configuration file.

In an embodiment, after the target configuration file is written into the eSIM card to activate the eSIM card, activation information of the eSIM card is acquired, and whether the eSIM card is activated is determined according to the activation information; and in the case where it is determined that the eSIM card is activated and a SIM card has been inserted, the SIM card is disabled. In the case where it is determined that the eSIM card is activated, the SIM card is disabled, so that the SIM card is merely used for the eSIM card to download a configuration file, thereby improving the efficiency and accuracy of the eSIM card in downloading a configuration file.

In an embodiment, the method for determining, according to the activation information, whether the eSIM card is activated may be as follows: whether the activation information includes first identification information is determined; if the activation information includes the first identification information, it is determined that the eSIM card is activated; and if the activation information includes second identification information, it is determined that the eSIM card is not activated. In the case where the eSIM card is not activated, the LPA is controlled to use a communication network of the SIM card to establish a communication connection with the server; and a configuration file download instruction of the eSIM card is sent to a server through the communication connection. By verifying whether the eSIM card is activated, the efficiency and accuracy of activating the eSIM card can be improved.

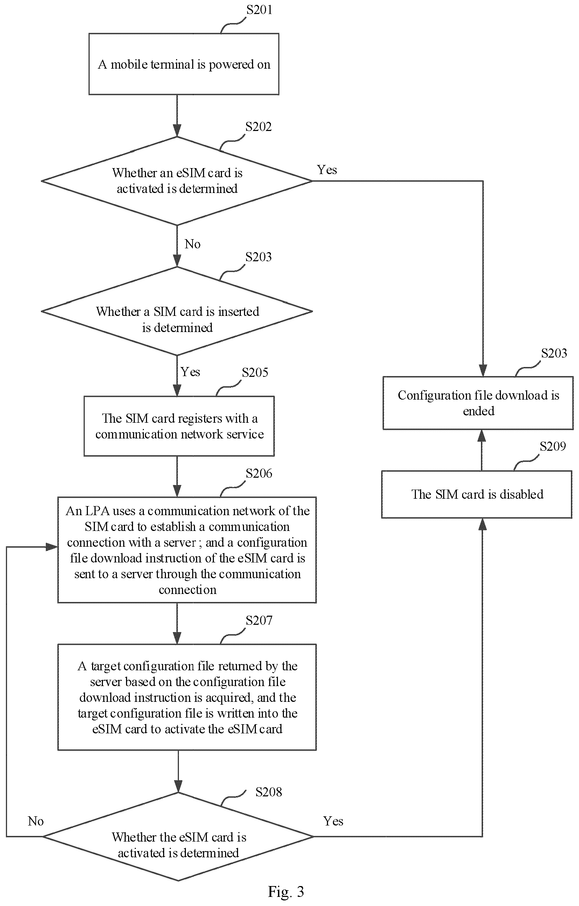

Exemplarily, as shown in Fig. 3, a mobile terminal is powered on S201; whether an eSIM card is activated is determined S202; in the case where the eSIM card is not activated, whether a SIM card is inserted is determined S203; in the case where the eSIM card is activated, configuration file download is ended S204; in the case where it is determined that a SIM card is inserted, the SIM card registers with a communication network service S205; in the case where the SIM card is registered with a communication network service, an LPA uses a communication network of the SIM card to establish a communication connection with a server; and a configuration file download instruction of the eSIM card is sent to a server through the communication connection S206; a target configuration file returned by the server based on the configuration file download instruction is acquired, and the target configuration file is written into the eSIM card to activate the eSIM card S207; whether the eSIM card is activated is determined S208; and in the case where the eSIM card is activated, the SIM card is disabled, S209; and the configuration file download is ended S204.

In the configuration file downloading method in the embodiments, after the mobile terminal is powered on, in the case where the eSIM card is not activated and the SIM card has been inserted, a communication network of the SIM card is used to send a configuration file download instruction of the eSIM card to a server; and a target configuration file returned by the server based on the configuration file download instruction is acquired, and the target configuration file is written into the eSIM card to activate the eSIM card. In the present solution, in the case where the eSIM card is not activated, a communication network of the SIM card is used to send a configuration file download instruction of the eSIM card to a server, so that the problem that the mobile terminal does not have a communication network can be solved; and a target configuration file returned by the server based on the configuration file download instruction is received, and the target configuration file is written into the eSIM card to activate the eSIM card, thereby greatly improving the convenience and accuracy of the eSIM card in downloading a target configuration file, and improving the efficiency of activating the eSIM card.

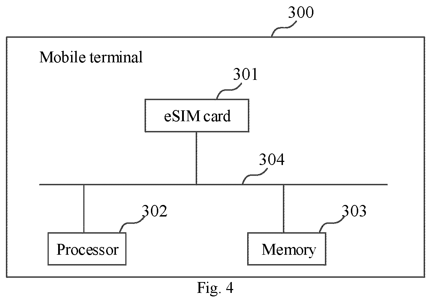

Please refer to Fig. 4, Fig. 4 is a schematic block diagram of the structure of a mobile terminal according to an embodiment of the present disclosure.

As shown in Fig. 4, the mobile terminal 300 includes an eSIM card 301, a processor 302, and a memory 303, wherein the eSIM card 301, the processor 302, and the memory 303 are connected using a bus 304, and the bus is, for example, an I2C (Inter-integrated Circuit) bus.

In an embodiment, the mobile terminal further includes a card slot, and the card slot is used for inserting a SIM card.

In an embodiment, the processor 301 is configured to provide computing and control capabilities, supporting the operation of the entire mobile terminal 300. The processor 301 may be a central processing unit (CPU), and the processor 301 may also be another general-purpose processor, a digital signal processor (DSP), an application-specific integrated circuits (ASIC), a field-programmable gate array (FPGA), or another programmable logic device, a discrete gate or transistor logic device, a discrete hardware component, or the like. The general processor may be a microprocessor, or the processor may also be any conventional processor.

In an embodiment, the memory 303 may be a Flash chip, a read-only memory (ROM) disk, an optical disk, a USB flash disk, a removable hard disk, or the like.

A person skilled in the art may understand that the structure shown in Fig. 4 is merely a block diagram of the parts related to the solutions of the embodiments of the present disclosure, and does not limit the mobile terminal to which the solutions of the embodiments of the present disclosure are applied. A specific mobile terminal may include more or fewer components than those shown in the diagram, or may combine some components, or have a different component arrangement.

The processor is configured to run a computer program stored in the memory, and when executing the computer program, the processor implements any one of the configuration file downloading methods provided in the embodiments of the present disclosure.

In an implementation, the processor 302 is configured to run a computer program stored in a memory, and when executing the computer program, the processor implements the following steps:
after the mobile terminal is powered on, in the case where the eSIM card is not activated and a SIM card has been inserted, a communication network of the SIM card is used to send a configuration file download instruction of the eSIM card to a server, wherein the SIM card is used for providing a communication network; and
a target configuration file returned by the server based on the configuration file download instruction is acquired, and the target configuration file is written into the eSIM card to activate the eSIM card.

In an embodiment, when the mobile terminal includes a local provisioning assistant (LPA) and a communication network of the SIM card is used to send a configuration file download instruction of the eSIM card to a server, the processor 302 is configured to implement:
the LPA is control to use a communication network of the SIM card to establish a communication connection with a server; and
a configuration file download instruction of the eSIM card is sent to the server through the communication connection.

In an embodiment, the processor 302 is further configured to implement:
applications other than the LPA are prohibited from using a communication network of the SIM card.

In an embodiment, after implementing that the mobile terminal is powered on, in the case where the eSIM card is not activated and a SIM card has been inserted, the processor 302 is further configured to implement:
whether the SIM card is registered with a communication network service is determined; and
in the case where the SIM card is not registered with a communication network service, a communication network service registration request is sent to the SIM card, so that the SIM card requests registration with a communication network service from a server matching the SIM card according to the communication network service registration request.

In an embodiment, before implementing that a communication network of the SIM card is used to send a configuration file download instruction of the eSIM card to a server, the processor 302 is further configured to implement:
after the mobile terminal is powered on, whether the eSIM card is activated is determined;
in the case where the eSIM card is not activated, whether the mobile terminal is connected to a WiFi hotspot is determined;
in the case where the mobile terminal is not connected to a WiFi hotspot, whether a SIM card has been inserted is determined; and
in the case where a SIM card has been inserted, a communication network of the SIM card is used to send a configuration file download instruction of the eSIM card to a server.

In an embodiment, when implementing that whether the eSIM card is activated is determined, the processor 302 is configured to implement:
a configuration file list of the eSIM card is acquired; and
whether the eSIM card is activated is determined according to the configuration file list.

In an embodiment, when implement that whether the eSIM card is activated is determined according to the configuration file list, the processor 302 is configured to implement:
whether a preset type of configuration file exists the configuration file list is determined; and
in the case where a preset type of configuration file exists in the configuration file list, it is determined that the eSIM card is activated, or in the case where the preset type of configuration file does not exist in the configuration file list, it is determined that the eSIM card is not activated.

In an embodiment, after implementing that the target configuration file is written into the eSIM to activate the eSIM card, the processor 302 is further configured to implement:
in the case where it is determined that the eSIM card is activated and a SIM card has been inserted, the SIM card is disabled.

It should be noted that, a person skilled in the art may clearly understand that, for the purpose of convenience and brevity in the description, for the specific operation process of the mobile terminal described above, reference may be made to the corresponding process in the foregoing configuration file downloading method embodiments, and details are not described herein again.

The embodiments of the present disclosure further provide a storage medium, which is used for computer-readable storage. The storage medium stores one or more programs. The one or more programs may be executed by one or more processors, so as to implement steps of any one of the configuration file downloading methods provided in the description of the embodiments of the present disclosure.

The storage medium may be an internal storage unit of the mobile terminal described in the foregoing embodiments, for example, a hard disk or a memory of the mobile terminal. The storage medium may also be an external storage device of the mobile terminal, for example, a plug-in hard disk, a smart memory card (SMC), a secure digital (SD) card, and a flash memory card (Flash Card) that are equipped on the mobile terminal.

A person skilled in the art can appreciate that the functional modules/units in all or some of the steps, systems, and devices of the methods disclosed above can be implemented as software, firmware, hardware, and any suitable combination thereof. In hardware implementations, the division between functional modules/units referred to in the description above does not necessarily correspond to the division of physical components; for example, a physical component may have multiple functions, or a function or step may be performed cooperatively by several physical components. Some or all of the physical components may be implemented as software executed by a processor, such as a central processor, digital signal processor, or microprocessor, or implemented as hardware, or implemented as an integrated circuit, such as an application-specific integrated circuit. Such software may be distributed on computer-readable media, which may include computer storage media (or non-transitory media) and communication media (or transitory media). As is well known to a person skilled in the art, the term computer storage media includes volatile and nonvolatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and which can be accessed by a computer. In addition, it is well known to a person skilled in the art that communication media typically include computer-readable instructions, data structures, program modules, or other data in a modulated data signal such as a carrier wave or other transmission mechanism, and may include any information delivery medium.

It should be understood that the term "and/or" as used in the description of embodiments of the present disclosure and the appended claims refers to any combination of one or more of the associated listed items and all possible combinations, and includes those combinations. It should be noted that, in this context, the terms "include", "including", or any other variation thereof are intended to cover a non-exclusive inclusion, so that a process, a method, an article, or a system that includes a series of elements not only includes those elements, but also includes other elements that are not explicitly listed, or further includes inherent elements of the process, the method, the article, or the system. In the absence of further limitations, an element defined by "including a..." does not exclude the possibility of additional identical elements being present in the process, method, article, or system that includes this element.

The serial numbers of the embodiments of the present disclosure are only for description, and do not represent the preference of the embodiments. The foregoing descriptions are merely embodiments of the embodiments of the present disclosure, but are not intended to limit the scope of protection of the embodiments of the present disclosure. Any equivalent modification or replacement readily figured out by a person skilled in the art within the technical scope disclosed in the embodiments of the present disclosure shall belong to the scope of protection of the embodiments of the present disclosure. Therefore, the scope of protection of the embodiments of the present disclosure shall be subject to the scope of protection of the claims.

## Claims

1. A configuration file downloading method, performed by a mobile terminal with an eSIM card, the method comprising:
after the mobile terminal is powered on, in a case where the eSIM card is not activated and a SIM card is inserted, sending, through a communication network of the SIM card, a configuration file download instruction of the eSIM card to a server, wherein the SIM card is used for providing the communication network; and
acquiring a target configuration file returned by the server based on the configuration file download instruction, and writing the target configuration file into the eSIM card to activate the eSIM card.

2. The configuration file downloading method according to claim 1, wherein the mobile terminal comprises a local provisioning assistant, LPA;
wherein sending, through a communication network of the SIM card, a configuration file download instruction of the eSIM card to a server comprises:
controlling the LPA through the communication network of the SIM card to establish a communication connection with the server; and
sending the configuration file downloading instruction of the eSIM card to the server through the communication connection.

3. The configuration file downloading method according to claim 2, wherein the method further comprises:
prohibiting applications other than the LPA from using the communication network of the SIM card.

4. The configuration file downloading method according to claim 1, wherein after the mobile terminal is powered on, in the case where the eSIM card is not activated and a SIM card is inserted, the method further comprises:
determining whether the SIM card is registered with a communication network service; and
in a case where the SIM card is not registered with a communication network service, sending a communication network service registration request to the SIM card, so that the SIM card requests registration of a communication network service from a server matching the SIM card according to the communication network service registration request.

5. The configuration file downloading method according to claim 1, wherein before sending, through a communication network of the SIM card, a configuration file downloading instruction of the eSIM card to a server, the method further comprises:
after the mobile terminal is powered on, determining whether the eSIM card is activated;
in a case where the eSIM card is not activated, determining whether the mobile terminal is connected to a WiFi hotspot; and
in a case where the mobile terminal is not connected to a WiFi hotspot, determining whether the SIM card is inserted; and
in a case where the SIM card is inserted, sending, through the communication network of the SIM card, the configuration file download instruction of the eSIM card to the server.

6. The configuration file downloading method according to claim 5, wherein determining whether the eSIM card is activated comprises:
acquiring a configuration file list of the eSIM card; and
determining whether the eSIM card is activated according to the configuration file list.

7. The configuration file downloading method according to claim 6, wherein determining whether the eSIM card is activated according to the configuration file list comprises:
determining whether a configuration file of preset type exists in the configuration file list; and
in a case where the configuration file of preset type of configuration file exists in the configuration file list, determining that the eSIM card is activated, or in a case where the configuration file of preset type of configuration file does not exist in the configuration file list, determining that the eSIM card is not activated.

8. The configuration file downloading method according to any one of claims 1-7, wherein after writing the target configuration file into the eSIM to activate the eSIM card, the method further comprises:
in a case where it is determined that the eSIM card is activated and the SIM card is inserted, disabling the SIM card.

9. A mobile terminal, the mobile terminal comprising an eSIM card, a processor, a memory, a computer program stored on the memory and executable by the processor, and a data bus for implementing a communication connection between the processor and the memory, wherein the computer program is configured to, when executed by the processor, implement steps of the configuration file downloading method according to any one of claims 1 to 8.

10. A storage medium, used for computer-readable storage, wherein the storage medium stores one or more programs, and the one or more programs is configured to, when executed by one or more processors, implement steps of the configuration file downloading method according to any one of claims 1 to 8.
